# EUROPÄISCHE PATENTSCHRIFT

(11) **EP 3 224 121 B1**
(45) Veröffentlichungstag und Bekanntmachung des Hinweises auf die Patenterteilung: **10.04.2019**
(21) Anmeldenummer: 15790983.9
(22) Anmeldetag: 09.11.2015
(51) Int. Cl.: B62D 21/15, B62D 25/08

(54) **FRONTENDBAUGRUPPE FÜR EIN KRAFTFAHRZEUG**
FRONT END ASSEMBLY FOR A MOTOR VEHICLE
MODULE DE PARTIE AVANT D'UN VÉHICULE AUTOMOBILE

(30) Priorität: 28.11.2014 DE 102014224438
(43) Veröffentlichungstag der Anmeldung: 04.10.2017
(73) Patentinhaber: Bayerische Motoren Werke Aktiengesellschaft, 80809 München (DE)
(72) Erfinder: FICHTINGER, Gerhard, 85630 Grasbrunn (DE); RIEDL, Wilhelm, 85276 Pfaffenhofen (DE); AKIF, Öztzan, 80937 München (DE)
(86) Internationale Anmeldenummer: PCT/EP2015/076049
(87) Internationale Veröffentlichungsnummer: WO 2016/083108

(56) Entgegenhaltungen:
- EP-A2- 2 599 689
- WO-A1-2013/014154
- DE-A1-102009 010 067
- DE-A1-102010 022 738

## Beschreibung

Die Erfindung betrifft eine Frontendbaugruppe für ein Kraftfahrzeug.

Ein Kraftfahrzeug umfasst üblicherweise eine lastübertragend mit einer Basiskarosserie des Kraftfahrzeugs verbundene Frontendbaugruppe, die Strukturbauteile aufweist, in denen Lastpfade verlaufen. Eine solche Frontendbaugruppe umfasst herkömmlich einen Stoßfängerquerträger mit einem frontseitig daran angeordneten Fußgängerschutzelement, beispielsweise aus einem Absorberschaum, einen geodätisch tiefer als der Stoßfängerquerträger angeordneten unteren Querträger mit einem weiteren frontseitig daran angeordneten Fußgängerschutzelement und ein geodätisch höher als der Stoßfängerquerträger angeordnetes oberes Bauteil. Der Stoßfängerquerträger ist in der Regel heckseitig über Deformationselemente mit Motorlängsträgern des Kraftfahrzeugs verbunden. Der untere Querträger kann über weitere Deformationselemente mit einem Vorderachsträger des Kraftfahrzeugs verbunden sein. Das obere Bauteil kann über seitliche Vertikalverbindungen und eine frontseitige V-förmige Verstrebung mit den Deformationselementen verbunden sein, über die der Stoßfängerquerträger mit den Motorlängsträgern verbindbar ist.

Herkömmlich verläuft ein Hauptlastpfad der Reihe nach durch das an dem Stoßfängerquerträger angeordnete Fußgängerschutzelement, durch den Stoßfängerquerträger, durch die Deformationselemente, über die der Stoßfängerquerträger mit den Motorlängsträgern verbunden ist, und durch die Motorlängsträger. Ein Nebenlastpfad verläuft der Reihe nach durch das an dem unteren Querträger angeordnete Fußgängerschutzelement, durch den unteren Querträger, durch die Deformationselemente, über die der untere Querträger mit dem Vorderachsträger verbunden ist, und durch den Vorderachsträger bzw. durch dessen Längsträger.

Fernen zeigt die WO 2013/014154 A1 ein Fahrzeugfrontendmodul eines Kraftfahrzeugs mit einem oberen Querträger und einem unteren Querträger, die seitlich über zwei Träger verbunden sind, sowie einem Stoßfängerquerträger.

Außerdem zeigt die EP 2 599 689 A2 ein Kraftfahrzeugfrontendmodul mit einem vorderen Abschnitt und einem hinteren Abschnitt, die über ein Zwischenstück verbunden sind.

Die DE 10 2010 022 738 A1 zeigt ferner eine gattungsgemäße Frontendbaugruppe.

Aufgabe der Erfindung ist es, eine hinsichtlich einer Lastaufnahme verbesserte Frontendbaugruppe für ein Kraftfahrzeug bereitzustellen.

Diese Aufgabe wird durch den unabhängigen Anspruch gelöst. Vorteilhafte Ausgestaltungen sind insbesondere in den abhängigen Ansprüchen angegeben, die jeweils für sich genommen oder in unterschiedlicher Kombination miteinander einen Aspekt der Erfindung darstellen können.

Die erfindungsgemäße Frontendbaugruppe für ein Kraftfahrzeug umfasst wenigstens einen Stoßfängerquerträger, wenigstens einen vertikal an dem Kraftfahrzeug und heckseitig zu dem Stoßfängerquerträger anordbaren, an einem Motorlängsträger des Kraftfahrzeugs befestigbaren Stützträger, der wenigstens einen zumindest teilweise oberhalb des Motorlängsträgers anordbaren oberen Endabschnitt aufweist, wenigstens eine sich von dem Stoßfängerquerträger rückwärtig und nach unten erstreckende Stützstrebe, über die frontal auf den Stoßfängerquerträger einwirkende Kräfte teilweise in einen Vorderachsträger des Kraftfahrzeugs einleitbar sind, und wenigstens ein zumindest teilweise geodätisch höher als der Stoßfängerquerträger und zumindest teilweise frontseitig vor dem oberen Endabschnitt des Stützträgers anordbares Deformationselement, das sich zumindest bei seiner Deformation wenigstens teilweise an dem oberen Endabschnitt des Stützträgers abstützt.

Erfindungsgemäß wird durch das Deformationselement und den Stützträger oberhalb eines durch den Stoßfängerquerträger verlaufenden Hauptlastpfads ein oberer Nebenlastpfad ausgebildet, der sich in einem mit dem Stützträger verbundenen Stirnwandträger des Kraftfahrzeugs fortsetzen kann. Ein unterer Nebenlastpfad wird durch die Stützstrebe ausgebildet, der sich in einem Längsträger eines Vorderachsträgers fortsetzen kann. Somit können über die erfindungsgemäße Frontendbaugruppe drei Lastpfade ausgebildet werden. Hierdurch können frontal auf eine Front des Kraftfahrzeugs einwirkende Lasten über eine größere, insbesondere die nahezu gesamte, Höhe der Fahrzeugfront, das heißt über einen größeren Lastaufnahmebereich, in die Frontendbaugruppe und dadurch in ein die Frontendbaugruppe umfassendes Crash-Management-System (CMS) des Kraftfahrzeugs eingeleitet werden. Die erfindungsgemäße Schaffung eines dritten Lastpfades bzw. die Aufteilung einer Last auf drei Lastpfade führt zu einer Senkung der Kräfte in einzelnen Bauteilen der Frontendbaugruppe. Hierdurch können diese Bauteile unter geringerem Materialaufwand hergestellt werden, was mit einer Gewichtseinsparung einhergeht. Ein mit der erfindungsgemäßen Frontendbaugruppe ausgestattetes Crash-Management-System kann somit effizienter ausgelastet werden als herkömmliche Crash-Management-Systeme. Insbesondere kann ein Crash-Management-System, das eine erfindungsgemäße Frontendbaugruppe aufweist, unterschiedliche Lasten über die Fahrzeugfront aufnehmen. Zudem besteht eine erhöhte Reaktionsfähigkeit auf unterschiedliche Crash-Anforderungen.

Die Erfindung eröffnet zudem die Möglichkeit, Bauteilen des Kraftfahrzeugs in der Umgebung des zusätzlichen oberen Nebenlastpfades lastübertragende bzw. crashübertragende Funktionen zu verleihen, wodurch diese Bauteile Teile des Crash-Management-Systems des Kraftfahrzeugs werden. Beispielsweise kann ein Scheinwerfer des Kraftfahrzeugs als crashübertragendes Element eingesetzt werden, wenn der zusätzliche obere Nebenlastpfad in der Nähe des Scheinwerfers verläuft.

Der Stoßfängerquerträger kann heckseitig über Deformationselemente an Motorlängsträgern des Kraftfahrzeugs abgestützt sein. Zur Befestigung des Stützträgers an dem Motorlängsträger kann der Stützträger eine durchgehende Aufnahme aufweisen, durch die der Motorlängsträger verläuft. Der Stützträger kann über eine kraftschlüssige, formschlüssige und/oder stoffschlüssige Verbindung an dem Motorlängsträger befestigt sein. Vorzugsweise umfasst die Frontendbaugruppe zwei entsprechende Stützträger, von denen bezügliche einer Fahrtrichtung des Kraftfahrzeugs einer an einem linksseitigen Motorlängsträger und einer an einem rechtsseitigen Motorlängsträger befestigbar ist.

Die Frontendbaugruppe kann auch zwei oder mehrere sich von dem Stoßfängerquerträger rückwärtig und nach unten erstreckende Stützstreben aufweisen, über die frontal auf den Stoßfängerquerträger einwirkende Kräfte jeweils teilweise in den Vorderachsträger des Kraftfahrzeugs einleitbar sind. Vorzugsweise ist der Stoßfängerquerträger über wenigstens eine Stützstrebe mit einem bezüglich der Fahrtrichtung des Kraftfahrzeugs linksseitigen Abschnitt, beispielsweise einem linksseitigen Längsträger, des Vorderachsträgers, und über wenigstens eine weitere Stützstrebe mit einem bezüglich der Fahrtrichtung des Kraftfahrzeugs rechtsseitigen Abschnitt, beispielsweise einem rechtsseitigen Längsträger, des Vorderachsträgers, verbunden.

Das Deformationselement kann sich dauerhaft oder nur bei seiner Deformation teilweise oder vollständig heckseitig an dem oberen Endabschnitt des Stützträgers abstützen. Das Deformationselement ist vorzugsweise derart ausgebildet, dass es bei seiner plastischen Deformation ausreichend Energie absorbiert. Die Frontendbaugruppe kann auch zwei oder mehrere teilweise oder vollständig geodätisch höher als der Stoßfängerquerträger und zumindest teilweise frontseitig vor dem oberen Endabschnitt von jeweils einem Stützträger anordbare Deformationselemente aufweisen.

Gemäß einer vorteilhaften Ausgestaltung weist der Stützträger wenigstens einen zumindest teilweise unterhalb des Motorlängsträgers anordbaren unteren Endabschnitt auf, mit dem die Stützstrebe mechanisch verbindbar ist. Hierdurch wird die Robustheit der Frontendbaugruppe erhöht bzw. die Frontendbaugruppe versteift. Hierbei kann vorgesehen sein, dass die Stützstrebe über den Stützträger oder direkt mit dem Vorderachsträger, insbesondere mit einem Längsträger des Vorderachsträgers, verbunden ist.

Nach einer weiteren vorteilhaften Ausgestaltung weist die Stützstrebe wenigstens einen Verbindungsabschnitt auf, über den die Stützstrebe mechanisch mit dem Vorderachsträger verbindbar ist. Hiernach ist die Stützstrebe direkt mit dem Vorderachsträger, insbesondere mit einem Längsträger des Vorderachsträgers, verbindbar.

Eine weitere vorteilhafte Ausgestaltung sieht vor, dass das Deformationselement und/oder die Stützstrebe über wenigstens eine Vertikalverbindung mit dem Stoßfängerquerträger verbunden sind bzw. ist. Hierdurch kann die Frontendbaugruppe robust und raumsparend ausgebildet werden, insbesondere da auf anderweitige, insbesondere herkömmliche, Verbindungsmittel verzichtet werden kann.

Es ist des Weiteren von Vorteil, wenn die Frontendbaugruppe wenigstens ein geodätisch höher als der Stoßfängerquerträger anordbares oberes Bauteil aufweist, das über die Vertikalverbindung mit dem Stoßfängerquerträger verbunden ist. Hierdurch kann auf eine herkömmliche V-förmige Verstrebung verzichtet werden, was mit einer verbesserten Bauraumausnutzung und einer erhöhten Designfreiheit einhergeht.

Weitere Einzelheiten, Merkmale und Vorteile der Erfindung ergeben sich aus der nachfolgenden Beschreibung und den Figuren. Es zeigen:
- Figur 1: eine schematische und perspektivische Darstellung einer herkömmlichen Frontendbaugruppe;
- Figur 2: eine schematische Seitenansicht eines Ausführungsbeispiels für eine erfindungsgemäße Frontendbaugruppe;
- Figur 3: eine schematische und perspektivische Darstellung der in Figur 2 gezeigten Frontendbaugruppe;
- Figur 4: eine schematische und perspektivische Darstellung eines weiteren Ausführungsbeispiels für einen Stützträger einer erfindungsgemäßen Frontendbaugruppe.

In den Figuren sind funktional gleiche Bauteile mit denselben Bezugszeichen versehen.

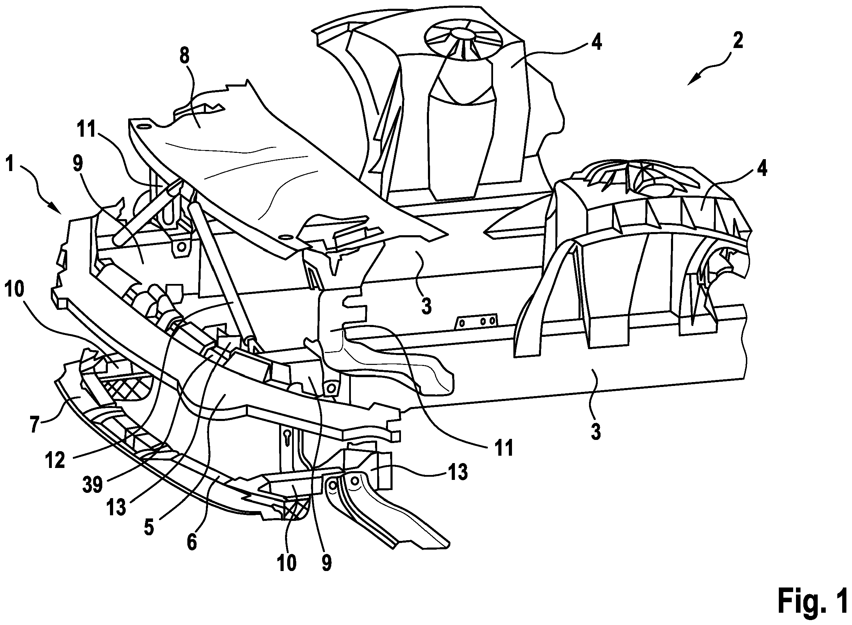

Figur 1 zeigt eine schematische und perspektivische Darstellung einer herkömmlichen Frontendbaugruppe 1 für ein Kraftfahrzeug 2, von dem lediglich ein Frontendabschnitt zu sehen ist.

Das Kraftfahrzeug 2 umfasst zwei parallel und beabstandet zueinander verlaufende Motorlängsträger 3, an denen jeweils ein Federbeindom 4 angeordnet ist.

Die Frontendbaugruppe 1 umfasst einen Stoßfängerquerträger 39, an dem frontseitig ein Fußgängerschutzelement 5 aus einem Absorberschaum angeordnet ist. Des Weiteren umfasst die Frontendbaugruppe 1 einen geodätisch tiefer als der Stoßfängerquerträger 39 angeordneten unteren Querträger 6 mit einem weiteren frontseitig daran angeordneten Fußgängerschutzelement 7 aus einem Absorberschaum. Zudem umfasst die Frontendbaugruppe 1 ein geodätisch höher als der Stoßfängerquerträger 39 angeordnetes oberes Bauteil 8. Der Stoßfängerquerträger 39 ist heckseitig über Deformationselemente 9 mit den Motorlängsträgern 3 des Kraftfahrzeugs 2 verbunden. Der untere Querträger 6 ist über weitere Deformationselemente 10 mit einem nicht gezeigten Vorderachsträger des Kraftfahrzeugs 2 verbunden. Das obere Bauteil 8 ist über seitliche Vertikalverbindungen 11 und eine frontseitige, V-förmige Verstrebung 12 mit den Deformationselementen 9 verbunden, über die der Stoßfängerquerträger 39 mit den Motorlängsträgern 3 verbunden ist. An den heckseitigen Enden der Deformationselemente 10 sind Verbindungseinheiten 13 angeordnet, über welche die Deformationselemente 10 mit nicht gezeigten Längsträgern des Vorderachsträgers verbunden werden können.

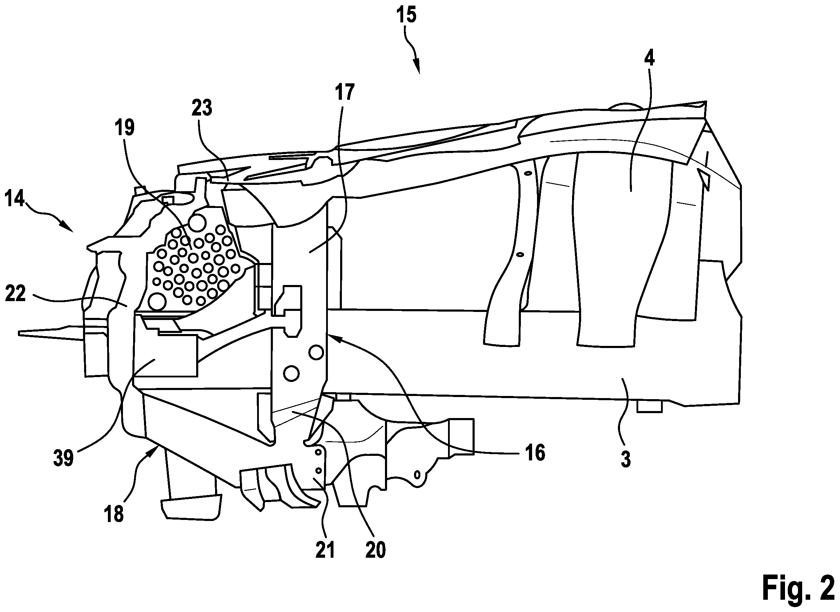

Figur 2 zeigt eine schematische Seitenansicht eines Ausführungsbeispiels für eine erfindungsgemäße Frontendbaugruppe 14 für ein Kraftfahrzeug 15, von dem lediglich ein Frontendabschnitt zu sehen ist.

Das Kraftfahrzeug 15 umfasst zwei parallel und beabstandet zueinander verlaufende Motorlängsträger 3, an denen jeweils ein Federbeindom 4 angeordnet ist. Wegen der Seitenansicht ist der dem Betrachter abgewandte Motorlängsträger 3 durch den dem Betrachter zugewandten Motorlängsträger 3 verdeckt.

Die Frontendbaugruppe 14 umfasst einen Stoßfängerquerträger 39, an dem frontseitig ein nicht gezeigtes Fußgängerschutzelement aus einem Absorberschaum angeordnet werden kann.

Des Weiteren umfasst die Frontendbaugruppe 14 zwei vertikal an dem Kraftfahrzeug 15 und rückwärtig zu dem Stoßfängerquerträger 39 anordbare, an jeweils einem Motorlängsträger 3 des Kraftfahrzeugs 15 befestigbare Stützträger 16. Wegen der Seitenansicht ist der dem Betrachter abgewandte Stützträger 16 durch den dem Betrachter zugewandten Stützträger 16 verdeckt. Jeder Stützträger 16 weist einen zumindest teilweise oberhalb des jeweiligen Motorlängsträgers 3 angeordneten oberen Endabschnitt 17 auf.

Zudem umfasst die Frontendbaugruppe 14 zwei sich von dem Stoßfängerquerträger 39 rückwärtig und nach unten erstreckende Stützstreben 18, über die frontal auf den Stoßfängerquerträger 39 einwirkende Kräfte jeweils teilweise in einen nicht gezeigten Vorderachsträger des Kraftfahrzeugs 15 einleitbar sind. Wegen der Seitenansicht ist die dem Betrachter abgewandte Stützstrebe 18 durch die dem Betrachter zugewandte Stützstrebe 18 verdeckt.

Die Frontendbaugruppe 14 umfasst auch zwei geodätisch höher als der Stoßfängerquerträger 39 und zumindest teilweise frontseitig vor dem oberen Endabschnitt 17 von jeweils einem Stützträger 16 angeordnete Deformationselemente 19, die sich zumindest bei ihrer Deformation wenigstens teilweise an dem oberen Endabschnitt 17 des jeweiligen Stützträgers 16 abstützen. Wegen der Seitenansicht ist das dem Betrachter abgewandte Deformationselement 19 durch das dem Betrachter zugewandte Deformationselement 19 verdeckt.

Jeder Stützträger 16 weist einen zumindest teilweise unterhalb des jeweiligen Motorlängsträgers 3 angeordneten unteren Endabschnitt 20 auf, mit dem die jeweilige Stützstrebe 18 mechanisch verbunden ist. Jede Stützstrebe 18 weist einen Verbindungsabschnitt 21 auf, über den die Stützstrebe 18 mechanisch mit dem Vorderachsträger verbindbar ist.

Die Frontendbaugruppe 14 umfasst des Weiteren wenigstens zwei Vertikalverbindungen 22. Wegen der Seitenansicht ist die dem Betrachter abgewandte Vertikalverbindung 22 durch die dem Betrachter zugewandte Vertikalverbindung 22 verdeckt. Jeweils ein Deformationselement 19 und jeweils eine Stützstrebe 18 sind über eine Vertikalverbindung 22 mit dem Stoßfängerquerträger 39 verbunden. Die Frontendbaugruppe 14 umfasst ferner ein geodätisch höher als der Stoßfängerquerträger 39 angeordnetes oberes Bauteil 23, das über die Vertikalverbindungen 22 mit dem Stoßfängerquerträger 39 verbunden ist.

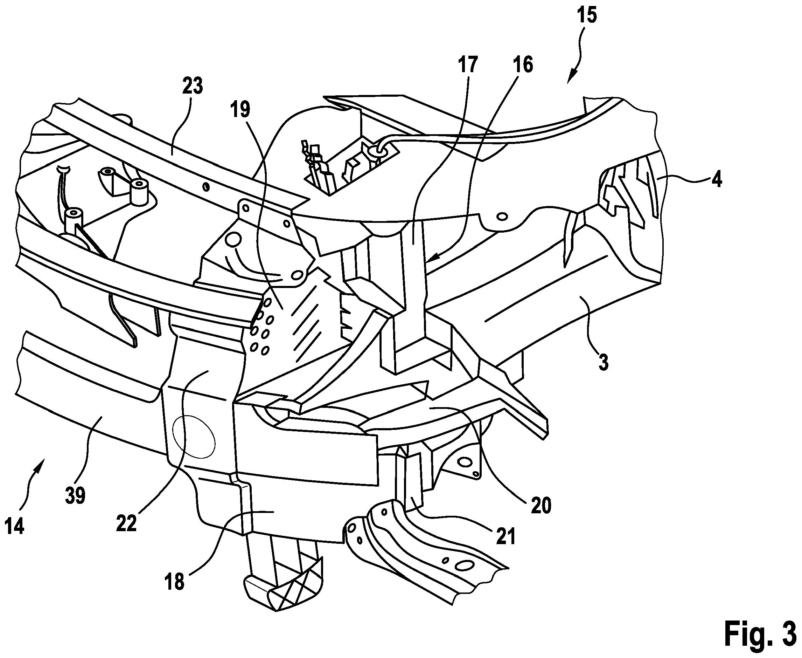

Figur 3 zeigt eine schematische und perspektivische Darstellung der in Figur 2 gezeigten Frontendbaugruppe 14. Es sind die Struktur des Deformationselementes 19 und der Aufbau der Vertikalverbindung 22 besser zu erkennen.

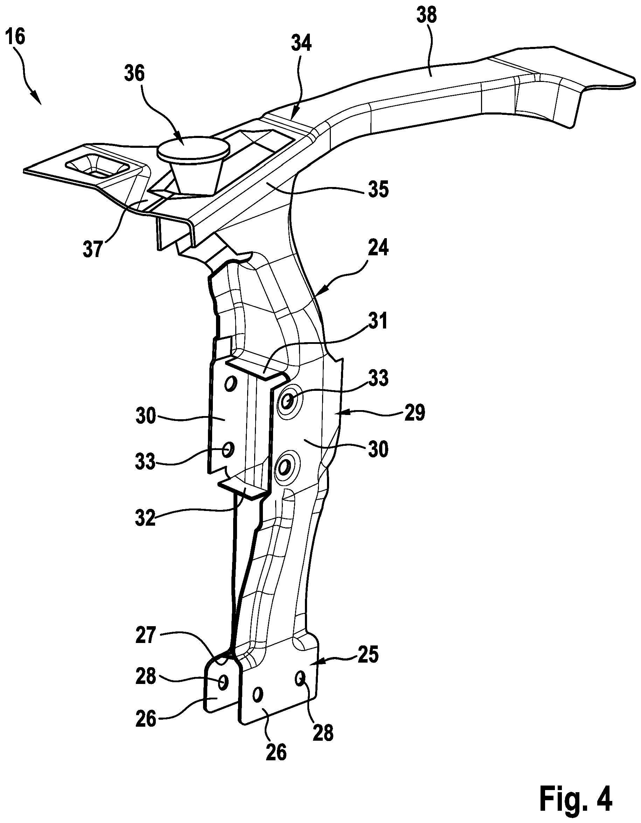

Figur 4 zeigt eine schematische und perspektivische Darstellung eines weiteren Ausführungsbeispiels für einen Stützträger 16 einer nicht weitergehender gezeigten erfindungsgemäßen Frontendbaugruppe.

Der Stützträger 16 umfasst einen im Wesentlichen vertikal an dem Kraftfahrzeug anordbaren Stützabschnitt 24.

Der Stützabschnitt 24 umfasst einen bodenseitig angeordneten unteren Anbindungsabschnitt 25 zur Anbindung an einen nicht gezeigten Längsträger eines Vorderachsträgers des Kraftfahrzeugs. Der untere Anbindungsabschnitt 25 ist als gabelförmige Aufnahme zum zumindest teilweise formschlüssigen Aufnehmen des Längsträgers ausgebildet. Der untere Anbindungsabschnitt 25 umfasst zwei parallel und beabstandet zueinander verlaufende Schenkel 26 sowie einen die Schenkel 26 miteinander verbindenden Steg 27, über den sich der Stützträger 16 auf dem Längsträger des Vorderachsträgers abstützen kann. An den Schenkeln 26 sind jeweils zwei Bohrungen 28 angeordnet, über die der Stützträger 16 mittels geeigneter Befestigungsmittel an dem Längsträger des Vorderachsträgers befestigbar ist.

Der Stützabschnitt 24 umfasst des Weiteren einen oberhalb des bodenseitigen Anbindungsabschnitts 25 angeordneten mittigen Anbindungsabschnitt 29 zur Anbindung an einen nicht gezeigten Motorlängsträger des Kraftfahrzeugs. Der mittige Anbindungsabschnitt 29 ist als durchgehende Aufnahme zum zumindest teilweise formschlüssigen Aufnehmen des Motorlängsträgers ausgebildet. Der mittige Anbindungsabschnitt 29 umfasst zwei parallel und beabstandet voneinander verlaufende Schenkel 30 und zwei die Schenkel 30 miteinander verbindende Stege 31 und 32, an denen sich der Motorlängsträger abstützen kann. An den Schenkeln 30 sind jeweils mindestens zwei Bohrungen 33 angeordnet, über die der Stützträger 16 mittels geeigneter Befestigungsmittel an dem Motorlängsträger befestigbar ist.

Ferner umfasst der Stützabschnitt 24 einen oberhalb des mittigen Anbindungsabschnitts 29 angeordneten oberen Anbindungsabschnitt 34 zur Anbindung an einen nicht gezeigten Federbeindom des Kraftfahrzeugs. An dem oberen Anbindungsabschnitt 34 ist ein Aufnahmeabschnitt 35 zur Aufnahme eines Frontklappenschlosses 36 des Kraftfahrzeugs angeordnet. Des Weiteren ist an dem oberen Anbindungsabschnitt 34 ein Befestigungsabschnitt 37 zur Anbindung an wenigstens ein weiteres Bauteil der Frontendbaugruppe angeordnet. Zudem ist an dem oberen Anbindungsabschnitt 34 eine in Richtung des Federbeindoms ragende Verlängerung 38 angeordnet.

Der oberhalb des mittigen Aufnahmeabschnitts 29 angeordnete vertikale Teil des Stützträgers 16 entspricht dem in den Figuren 2 und 3 angesprochenen oberen Endabschnitt, an dem sich ein nicht gezeigtes Deformationselement zumindest bei seiner Deformation abstützen kann. Der unterhalb des mittigen Aufnahmeabschnitts 29 angeordnete vertikale Teil des Stützträgers 16 entspricht dem in den Figuren 2 und 3 angesprochenen unteren Endabschnitt, der über den unteren Anbindungsabschnitt 25 direkt mit dem Längsträger des Vorderachsträgers verbindbar ist.

### Bezugszeichenliste:

1 Frontendbaugruppe
2 Kraftfahrzeug
3 Motorlängsträger
4 Federbeindom
5 Fußgängerschutzelement
6 Querträger
7 Fußgängerschutzelement
8 Bauteil
9 Deformationselement
10 Deformationselement
11 Vertikalverbindung
12 Verstrebung
13 Verbindungseinheit
14 Frontendbaugruppe
15 Kraftfahrzeug
16 Stützträger
17 oberer Endabschnitt
18 Stützstrebe
19 Deformationselement
20 unterer Endabschnitt
21 Verbindungsabschnitt
22 Vertikalverbindung
23 oberes Bauteil
24 Stützabschnitt
25 unterer Anbindungsabschnitt
26 Schenkel
27 Steg
28 Bohrung
29 mittiger Anbindungsabschnitt
30 Schenkel
31 Steg
32 Steg
33 Bohrung
34 oberer Anbindungsabschnitt
35 Aufnahmeabschnitt
36 Frontklappenschloss
37 Befestigungsabschnitt
38 Verlängerung
39 Stoßfängerquerträger

## Patentansprüche

1. Frontendbaugruppe (14) für ein Kraftfahrzeug (15), aufweisend
- wenigstens einen Stoßfängerquerträger (39),
- wenigstens einen vertikal an dem Kraftfahrzeug (15) und heckseitig zu dem Stoßfängerquerträger (39) anordbaren, an einem Motorlängsträger (3) des Kraftfahrzeugs (15) befestigbaren Stützträger (16), der wenigstens einen zumindest teilweise oberhalb des Motorlängsträgers (3) anordbaren oberen Endabschnitt (17) aufweist, und
- wenigstens ein zumindest teilweise geodätisch höher als der Stoßfängerquerträger (39) und zumindest teilweise frontseitig vor dem oberen Endabschnitt (17) des Stützträgers (16) anordbares Deformationselement (19), das sich zumindest bei seiner Deformation wenigstens teilweise rückwärtig an dem oberen Endabschnitt (17) des Stützträgers (16) abstützt,
**dadurch gekennzeichnet, dass**
die Frontendbaugruppe (14) wenigstens eine sich von dem Stoßfängerquerträger (39) rückwärtig und nach unten erstreckende Stützstrebe (18) aufweist, über die frontal auf den Stoßfängerquerträger (39) einwirkende Kräfte teilweise in einen Vorderachsträger des Kraftfahrzeugs (15) einleitbar sind.

2. Frontendbaugruppe (14) nach Anspruch 1, **dadurch gekennzeichnet, dass** der Stützträger (16) wenigstens einen zumindest teilweise unterhalb des Motorlängsträgers (3) anordbaren unteren Endabschnitt (20) aufweist, mit dem die Stützstrebe (18) mechanisch verbindbar ist.

3. Frontendbaugruppe (14) nach Anspruch 1 oder 2, **dadurch gekennzeichnet, dass** die Stützstrebe (18) wenigstens einen Verbindungsabschnitt (21) aufweist, über den die Stützstrebe (18) mechanisch mit dem Vorderachsträger verbindbar ist.

4. Frontendbaugruppe (14) nach einem der Ansprüche 1 bis 3, **dadurch gekennzeichnet, dass** das Deformationselement (19) und/oder die Stützstrebe (18) über wenigstens eine Vertikalverbindung (22) mit dem Stoßfängerquerträger (39) verbunden sind bzw. ist.

5. Frontendbaugruppe (14) nach Anspruch 4, **gekennzeichnet durch** wenigstens ein geodätisch höher als der Stoßfängerquerträger (39) anordbares oberes Bauteil (23), das über die Vertikalverbindung (22) mit dem Stoßfängerquerträger (39) verbunden ist.

## Claims

1. Front end assembly (14) for a motor vehicle (15), having
- at least one bumper transverse beam (39),
- at least one supporting beam (16) that can be arranged vertically on the motor vehicle (15) and to the rear of the bumper transverse beam (39) and can be fixed on an engine longitudinal beam (3) of the motor vehicle (15) and has at least one upper end section (17) that can be arranged at least partially above the engine longitudinal beam (3),
and
- at least one deformation element (19), at least part of which can be arranged geodetically higher than the bumper transverse beam (39), and that can be arranged at least partially at the front in front of the upper end section (17) of the supporting beam (16) and is at least partially supported at the back on the upper end section (17) of the supporting beam (16), at least when it deforms, **characterised in that**
the front end assembly (14) has at least one supporting strut (18) extending downwards and backwards from the bumper transverse beam (39), via which the forces acting on the front of the bumper transverse beam (39) can be partially directed to a front axle beam of the motor vehicle (15).

2. Front end assembly (14) according to claim 1, **characterised in that** the supporting beam (16) has at least one lower end section (20) that can be arranged at least partially below the engine longitudinal beam (3) and with which the supporting strut (18) can be connected mechanically.

3. Front end assembly (14) according to claim 1 or 2, **characterised in that** the supporting strut (18) has at least one connecting section (21), via which the supporting strut (18) can be connected mechanically to the front axle beam.

4. Front end assembly (14) according to any of claims 1 to 3, **characterised in that** the deformation element (19) and/or the supporting strut (18) are or is connected to the bumper transverse beam (39) via at least one vertical connection (22).

5. Front end assembly (14) according to claim 4, **characterised by** at least one upper component (23) that can be arranged geodetically higher than the bumper transverse beam (39) and is connected to the bumper transverse beam (39) via the vertical connection (22).

## Revendications

1. Module de partie avant (14) d'un véhicule (15) comprenant :
- au moins une barre de support transversale de pare-choc (39),
- au moins une barre de support (16) pouvant être installée verticalement sur le véhicule (15) et du côté arrière de la barre de support transversale du pare-choc (39), pouvant être fixée sur une barre de support longitudinale (3) du moteur du véhicule (15), et qui comporte un segment d'extrémité supérieur (17) pouvant être installé au moins partiellement au-dessus de la barre de support longitudinale du moteur (3), et
- au moins un élément de déformation (19) pouvant être installé au moins partiellement géodésiquement plus haut que la barre de support transversale du pare-choc (39) et au moins partiellement côté frontal à l'avant du segment d'extrémité supérieur (17) de la barre de support (16), et, qui s'appuie, au moins lors de sa déformation au partiellement vers l'arrière sur le segment d'extrémité supérieur (17) de la barre de support (16),
**caractérisé en ce que**
le module d'extrémité avant (14) comporte au moins une entretoise de support (18) s'étendant vers l'arrière à partir de la barre de support transversale du pare-choc (39) et vers le bas, permettant de transférer des forces agissant frontalement sur la barre de support transversale du pare-choc (39) partiellement dans le support de l'essieu avant du véhicule (15).

2. Module d'extrémité avant (14) conforme à la revendication 1, **caractérisé en ce que**
la barre de support (16) comporte au moins un segment d'extrémité inférieur (20) pouvant être installé au moins partiellement au-dessous de la barre de support longitudinale du moteur (3), avec lequel l'entretoise de support (18) peut être reliée mécaniquement.

3. Module d'extrémité avant (14) conforme à la revendication 1 ou 2, **caractérisé en ce que**
l'entretoise de support (18) comporte au moins un segment de liaison (21) permettant de la relier mécaniquement au support de l'essieu avant.

4. Module d'extrémité avant (14) conforme à l'une des revendications 1 à 3,
**caractérisé en ce que**
l'élément de déformation (19) et/ou l'entretoise de support (18) est(sont) relié(es) à la barre de support transversale du pare-choc (39) par l'intermédiaire d'au moins une liaison verticale (22).

5. Module d'extrémité avant (14) conforme à la revendication 4, **caractérisé par**
au moins un élément supérieur (23) pouvant être installé géodésiquement plus haut que la barre de support transversale du pare-choc (39) qui est relié à cette barre de support transversale du pare-choc (39) par l'intermédiaire de la liaison verticale (22).
